# EUROPÄISCHE PATENTSCHRIFT

(11) **EP 0 816 168 B1**
(45) Veröffentlichungstag und Bekanntmachung des Hinweises auf die Patenterteilung: **31.07.2002**
(21) Anmeldenummer: 97110277.7
(22) Anmeldetag: 24.06.1997
(51) Int. Cl.: B60Q 1/52, G08G 1/0965

(54) **Einrichtung zur Übertragung von Informationen von Fahrzeug zur Fahrzeug**
Informations transmission device between vehicles
Dispositif de transmission d'informations entre véhicules

(30) Priorität: 28.06.1996 DE 19625960
(43) Veröffentlichungstag der Anmeldung: 07.01.1998
(73) Patentinhaber: Rudel, Thomas, 75224 Ispringen (DE)
(72) Erfinder: Rudel, Thomas, 75224 Ispringen (DE)
(74) Vertreter: Reinhardt, Harry

(56) Entgegenhaltungen:
- EP-A- 0 446 163
- WO-A-94/08322
- DE-A- 3 643 169
- DE-A- 3 902 627
- DE-A- 3 941 402
- DE-A- 4 442 189
- FR-A- 2 655 755
- GB-A- 2 204 435
- US-A- 3 533 061
- US-A- 3 892 483

## Beschreibung

Die Erfindung betrifft eine Einrichtung zur Übertragung von Informationen von Fahrzeug zu Fahrzeug nach dem Oberbegriff des Anspruches 1.

Der Wunsch zur Erhöhung der Sicherheit, Informationen von Fahrzeug zu Fahrzeug zu senden, besteht bereits seit langem und wird bei zunehmender Verkehrsdichte immer dringender. Aufgrund der schlecht zu realisierenden Richtwirkung, der hohen Störanfälligkeit und der Elektrosmoggefahr eines Funksignals oder Radarsignals scheidet die Informationsübermittlung in diesem Wellenbereich in der Regel jedoch aus.

Die optische Informationsübertragung scheitert bisher an der lediglich kurzen Reichweite, die von den bisherigen Empfänger-Senderkonstellationen verwirklicht werden konnten.

Insofern ist z.B. aus der DE-A 39 02 627 eine gattungsbildende Einrichtung bekannt, bei der unter Einsatz eines Infrarotstrahlers und eines Infrarotempfängers eine Abstandsmessung aufgrund der Erkennung der Rückleuchten eines vorausfahrenden Kraftfahrzeuges durchgeführt wird. Als Infrarotstrahler wird dabei eine Leuchtdiode im Bremslicht verwendet. Eine derartige Leuchtdiode hat zwar den Vorteil, daß das nachfolgende Fahrzeug die Infrarotstrahlung auch bei schlechten Sichtverhältnissen z.B. im Nebel erkennen kann, allerdings sind derartige Leuchtdioden verhältnismäßig teuer und müssen in vielen Fahrzeugen nachgerüstet werden, um ein entsprechendes System auf Dauer in der Großserie verwirklichen und damit überhaupt einsetzen zu können. Ebenso ist die Übertragung gepulster Infrarotsignale aus der GB-PS 1,001,394 bekannt, oder aus der FR-A 2 655 755, wobei auch dort die Informationsübertragung im nichtsichtbaren Infratrotbereich erfolgt.

Aus der WO-A 94/08322 ist ein System bekannt, bei dem Informationen zwischen mehreren sich in einer Kolonne befindenden Fahrzeugen übermittelt werden. Die Informationen werden beispielsweise mittels Lichtwellen oder Radiowellen übertragen, die der Empfänger mittels einer Überwachungseinrichtung kontrolliert. Als Empfänger kann auch ein Bremslicht eingesetzt werden, jedoch wird im Gegensatz zu den Radiowellen in diesem Fall lediglich die Amplitude des Bremslichts überwacht.

Aus der DE-A 44 42 189 ist ein System bekannt, mit dem ein Fahrzeug mittels eines Senders Lichtwellen oder Hochfrequenzstrahlung aussendet und die rückgestreuten Wellen mittels eines Empfängers zur Abstandsmessung empfängt. Das System arbeitet autark und damit unabhängig von anderen Fahrzeugen. Eine Modulation von sichtbarem Licht mit einer nicht sichtbaren Frequenz läßt sich jedoch nicht entnehmen.

In der WO-A 96/07084 wurde vorgeschlagen, eine Photodiode mittels eines selbstregelnden Widerstandes unterhalb der Sättigungsspannung zu halten. Dadurch läßt sich Gleichlicht und damit Fremdlicht so kompensieren, daß selbst schwache gepulste Lichtsignale deutlich zu erkennen sind. Der dortige Vorschlag hatte allerdings die Aufgabe einer Energieeinsparung, was für die Kompensation bei der Informationsübertragung nicht zwingend erforderlich ist.

Ausgehend von diesem Stand der Technik liegt der vorliegenden Erfindung die Aufgabe zugrunde, eine Einrichtung der eingangs genannten Gattung derart weiterzubilden, daß eine optische Informationsübertragung von Fahrzeug zu Fahrzeug günstig zu verwirklichen ist.

Diese Aufgabe wird durch eine Einrichtung mit den Merkmalen des Anspruches 1 gelöst.

Werden in einer solchen Einrichtung Leuchtdioden verwendet, so lassen sich codierte Lichtsignale auch mit einer Frequenz übermitteln, die vom Auge nicht mehr wahrnehmbar ist. Insofern können hier auch weitere Informationen wie z.B. Brems-, Geschwindigkeitsoder Abstandsinformationen an das nachfolgende Fahrzeug übermittelt werden. Ohne daß der Fahrzeugführer abgelenkt wird, ermittelt das Fahrzeug für die Sicherheit relevante Informationen, die es an den Fahrer bedarfsweise weitergibt. Dabei kann im fUr das menschliche Auge sichtbaren Wellenbereich mit den bereits in der Fahrzeugindustrie eingesetzten Leuchtdioden in Bremsleuchten gearbeitet werden, so daß günstig eine Einführung dieses Systems auch in der Großserie erfolgen kann, obwohl diese Leuchtdioden keinen Infrarotanteil haben. Zum Großeinsatz muß nur noch eine Ankopplung an eine Schalteinrichtung für die Leuchtdioden im sendenden Fahrzeug und ein Empfänger im empfangenden Fahrzeug vorgesehen werden. Dies ist dennoch günstiger und damit schneller zu verwirklichen, als bei den im Stand der Technik vorgeschlagenen Systemen.

Nach dem Anspruch 2 wird die Übertragungsstrecke so aufgebaut, daß der Empfänger auch bei größerem Abstand zwischen den Fahrzeugen die übermittelten Signale zuverlässig aus dem Fremdlicht ausfindig machen kann.

Wird die Einrichtung gemäß Anspruch 4 als Zusatzeinrichtung ausgebildet, so läßt sie sich problemlos in bestehenden Fahrzeugen nachrüsten. Die bisherige Bremslichtanlage gibt dabei die bekannten Ein-Aus-Signale ab, während eine weitere Informationsübermittlung über die Zusatzeinrichtung erfolgen kann, die für sich autark betätigt wird, sobald es nur ans Bordnetz angeschlossen ist.

Gemäß Anspruch 5 können Informationen in Abhängigkeit der tatsächlichen Verzögerung oder Beschleunigung übermittelt werden, so daß der nachfolgende Verkehr mehr Informationen über den Bremsvorgang oder die Geschwindigkeit des Vordermanns erhält. Nimmt er z.B. am Berg den Fuß vom Gas, wird das Fahrzeug verzögert, ohne daß bisher eine Bremsinformation an das nachfolgende Fahrzeug übermittelt wird. Eine derartige Information kann jetzt weitergegeben werden.

Weitere Vorteile ergeben sich aus den Unteransprüchen. Im folgenden wird die Erfindung anhand von in den beigefügten Zeichnungen dargestellten Ausführungsbeispielen näher erläutert. Es zeigen:
- Fig. 1: ein Blockschaltbild des Senders einer mit einem Beschleunigungssensor ausgestatteten Einrichtung,
- Fig. 2a-2c: Informationsübertragung durch Modulation des Bremslichtes,
- Fig. 3a,3b: ein Informationsübertragungssystem mit Sender und Empfänger.

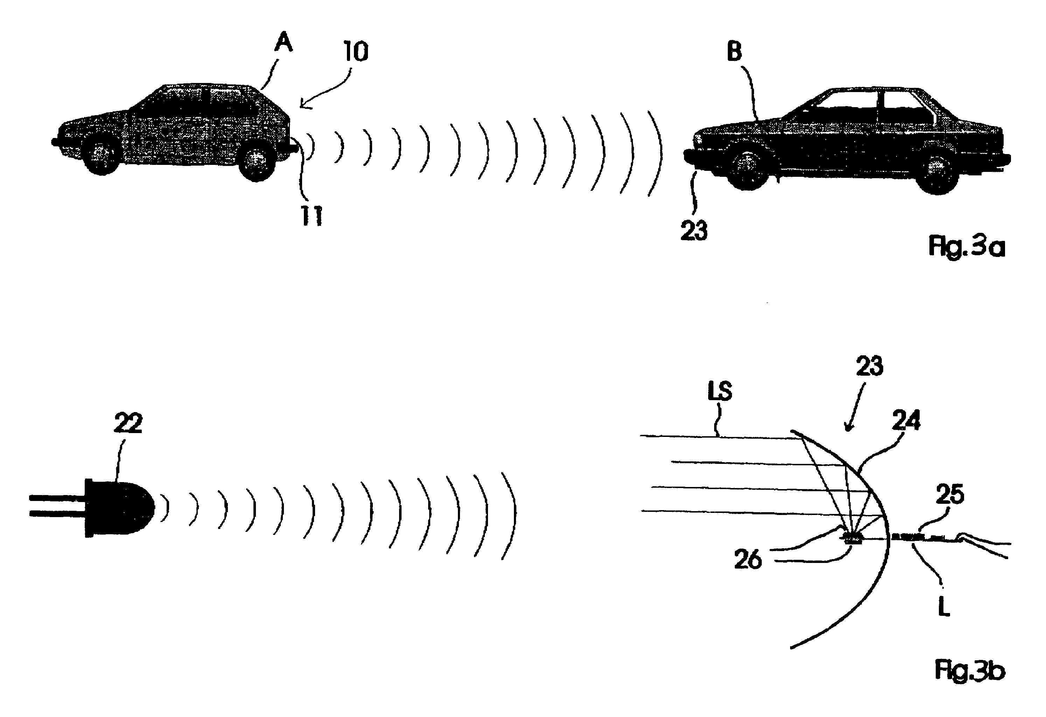

Eine Einrichtung zur Übertragung von Informationen von einem vorausfahrenden Fahrzeug A an ein nachfolgendes Fahrzeug B ist in den Fig 3a, 3b dargestellt und umfaßt einen Sender 11, z.B. In Verbindung mit dem Bremslicht oder als eigenständige Einrichtung, insbesondere wenn es um die Informationsübermittlung im nichtsichtbaren Lichtbereich geht.

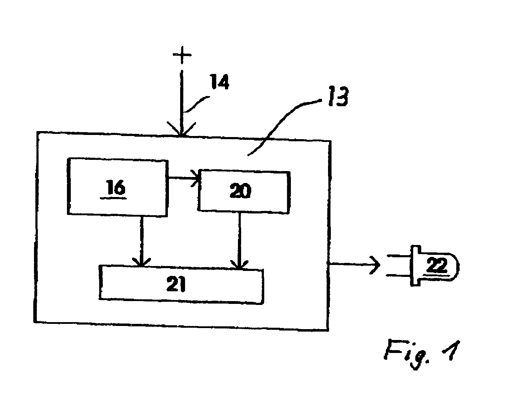

Den Sender dieser Einrichtung zeigt das Blockschaltbild in Fig. 1.

Wenigstens eine Leuchtdiode 22 ist vorgesehen, um Lichtsignale LS im sichtbaren Wellenbereich des Lichts in einer vom menschlichen Auge nicht wahrnehmbaren Frequenz zu übertragen. Eine Schalteinrichtung 13 schaltet in Abhängigkeit zumindest eines z.B. vom Bremsvorgang oder von der Geschwindigkeit abhängigen Signals die Leuchtdiode an eine Stromversorgung 14. Zu diesem Zweck kann das Signal z.B in Abhängigkeit der tatsächlichen Verzögerung, Beschleunigung oder Geschwindigkeit ermittelt werden, so daß nicht nur Bremsvorgänge, sondern auch Beschleunigungsvorgänge ermittelt und gegebenenfalls als Information an das nachfolgende Fahrzeug B weitergereicht werden. Die Schalteinrichtung 13 kann die Stärke und/oder Frequenz des Senders 11 in Abhängigkeit der Größe der Geschwindigkeit, Verzögerung oder Beschleunigung des Fahrzeugs B regeln.

Zur Ermittlung der Informationen kann z.B. ein Beschleunigungssensor 16 vorgesehen werden. Ergänzende Informationen z.B. Über den Stillstand des Fahrzeugs können durch Kombination mit einem Bewegungssensor ermittelt werden, der z.B. der Tachogeber des Tachometers sein kann. Meldet dieser Bewegungssensor, daß das Fanrzeug steht, so wird das Bremslicht 11 eingeschaltet. Informationen können auch aus weiteren Systemen im Fahrzeug herangezogen werden wie z.B. Anti-Blockier-Systemen, Traktionsregelungen und dergleichen.

Das so ermittelte Signal wird an eine Impulsmodulation 20 und an den Treiber 21 für die Leuchtdiode 22 Übergeben. Mit dem Beschleunigungssensor 16 wird ein Signal ausgelöst, wenn ein Fahrzeug z.B. bei der Fahrt an einer Steigung das Gas wegnimmt, bzw. in einen anderen Gang schaltet, während bisher bei derartigen plötzlichen Geschwindigkeitsänderungen nicht einmal das Bremslicht aufleuchtet. Ebenso wird beim vorgeschlagenen System bei einem Auffahrunfall automatisch ein Signal ausgelöst, so daß auch der nachfolgende Verkehr besser gewarnt ist.

Die Einrichtung kann eine Zusatzeinrichtung sein wie z.B. eine in den letzten Jahren in Mode gekommene Zusatzbremsleuchte im Heckfenster des Fahrzeugs. Diese Bremsleuchte wird bisher mit den jetzigen Bremsleuchten parallel geschaltet und leuchtet zusammen mit ihnen auf, wozu bisher ein Anschluß an die Lichtleitung für das Bremslicht erforderlich ist. Demgegenüber wird die Zusatzeinrichtung jetzt vom Bordnetz nur noch mit Strom versorgt. Es kann seinen eigenen Beschleunigungssensor besitzen. Der preiswerte Beschleunigungssensor ist z.B. in einem IC untergebracht und braucht nur wenig Platz. Die Zusatzeinrichtung ist insofern autark und kann Schalteinrichtung 13 und Beschleunigungssensor 16 bereits integriert enthalten, so daß diese Zusatzeinrichtung unabhängig vom Fahrzeugtyp leicht in jedes beliebige Fahrzeug nachgerüstet werden kann, da lediglich ein Anschluß an das 12 Volt-Bordnetz nötig ist.

Da nun die tatsächliche Verzögerung oder Beschleunigung ermittelt wird, kann die nun gewonnene Information auch als sichtbare Farbinformation an das nachfolgende Fahrzeug B weitergegeben werden. Werden z.B. mehrere verschiedenfarbige Leuchtdioden eingesetzt, so kann eine erste Farbe eine Verzögerung des Fahrzeugs und eine zweite Farbe eine Beschleunigung des Fahrzeuges anzeigen. So können z.B. grUne und rote Leuchtdioden nebeneinander eingesetzt werden. Bei einer Beschleunigung wird die grüne Leuchtdiode geschaltet und es ergibt sich ein grünes Lichtsignal "freie Fahrt". Bei gleichbleibender Geschwindigkeit wird keine Leuchtdiode betätigt. Geht der Fahrer vom Gas, ohne das Fahrzeug weiter abzubremsen, so daß sich allein aufgrund der Reibwiderstände oder aufgrund einer Steigung eine Verzögerung einstellt, werden die grüne und die rote Leuchtdiode geschaltet und es ergibt sich ein gelbes Lichtsignal "Achtung". Bei einer tatsächlichen Verzögerung wird nur die rote Leuchtdiode betätigt, was ein Lichtsignal "Vorsicht, Bremsung" erzeugt.

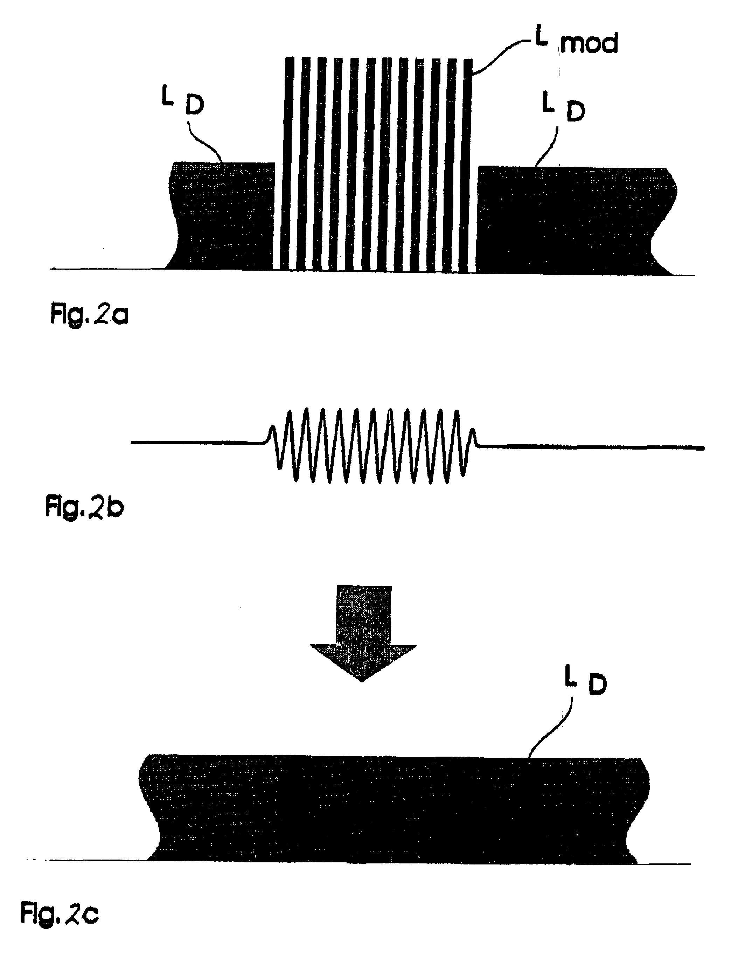

Die Leuchtdioden 22 senden ein codiertes, gepulstes Lichtsignal LS in einer vom menschlichen Auge nicht wahrnehmbaren Frequenz im für das menschliche Auge sichtbaren Wellenbereich, die von einem außerhalb des Fahrzeugs befindlichen Empfänger 23 im nachfolgenden Fahrzeug B erkennbar ist. Dadurch könnte das nachfolgende Fahrzeug z.B. automatisch auf den Bremsvorgang des vorausfahrenden Fahrzeugs reagieren. Die Codierung kann z.B. in einer einfachen Modulation wie z.B. einem Takten der Leuchtdioden 22 mit einer Frequenz erfolgen, die höher ist als natürliche, in der Umwelt vorkommende Lichtschwankungen, z.B. im Bereich von einigen KHz. Technisch sind heute Taktfrequenzen bis zu einigen MHz möglich. Die insofern übermittelte Lichtinformation zeigt Fig. 2a. Ausgehend von einem Dauerlicht L_{D} wird die Information durch modulierte Lichtsignale L_{mod} übermittelt und nach Informationsübermittlung stellt sich wieder das Dauerlicht L_{D} ein. Das empfangene Signal ergibt sich aus Fig. 2b. Das menschliche Auge empfindet jedoch das mit einigen KHz getaktete Signal wie ein Gleichlichtsignal gemäß Fig. 2c. Beachtet man, daß man bei einem gepulsten Signal mit dem Puls-Pause Faktor 1:1 die Pulsleistung verdoppeln kann, so ändert sich die visuell wahrgenommene Lichtstärke bei gepulstem Licht gegenüber Gleichlicht nicht. Insofern könnte selbst eine in einem Bremslicht eingebaute Leuchtdiode während der sichtbaren Anzeige "Bremsen" infolge der Frequenz nicht wahrnehmbare Lichtsignale Übermitteln.

Ein Fahrzeug kann also z.B. eine Information über seinen Bremsvorgang, also über die "wirkliche" Abbremsung fUr den Fahrer unsichtbar dem nachfolgenden Fahrzeug B mitteilen. Durch einen einfach aufgebauten Empfänger wird das gepulste Lichtsignal erkannt und ausgewertet. In Abhängigkeit von der Stärke des Bremsvorgangs des vorherfahrenden Fahrzeuges kann durch die modulierte Informationsübertragung bei dem nachfolgenden Fahrzeug ein Warnton oder bei starker Bremswirkung ein automatischer Bremsvorgang ausgelöst werden. Aufgrund der hohen möglichen Datenübertragungsrate im modulierten Licht können natürlich auch zusätzliche Daten des vorausfahrenden Fahrzeuges, z.B. über das ABS-Verhalten bei Aquaplaning übermittelt werden.

Grundsätzlich kann im Lichtsignal zusätzlich eine codierte, im einfachsten Fall mit einigen KHz gepulste, dauernde Infrarot-Aussendung zur Abstandsdetektion vorgesehen werden. Infrarotlicht durchdringt Nebel wesentlich besser, so daß auch bei schlechter Sicht vor zu gering werdendem Abstand gewarnt werden kann. Im Fahrzeug B wird das codierte oder getaktete Infrarotlicht mittels eines einfach aufgebauten Empfängers 23 detektiert.

Das Aussenden dieser Informationen ist sinnvoll nur dann möglich, wenn auch in nachfolgenden Fahrzeugen entsprechende Empfangseinheiten vorgesehen sind. Als Empfänger eignet sich ein Empfänger mit Reflektor 24, der sich durch hohe Empfindlichkeit und sehr gute Richtwirkung auszeichnet. Gemäß Fig. 3b können insofern zwei Photodioden 26 im Brennpunkt eines kleinen Autoscheinwerferreflektors als Lichtempfänger eingesetzt werden. Dadurch kann ein im Automobilbereich bereits eingesetztes Teil verwendet werden. Aufgrund der großen Lichteintrittsfläche wird bei Regen die Empfindlichkeit des Systems nur unwesentlich beeinträchtigt. In Versuchen hat sich z.B. gezeigt, daß mit einem Durchmesser des Reflektors von nur 15 cm und 10 Sende-Leuchtdioden Reichweiten von über 100 m bei einer Signalfrequenz von 20 KHz bis über 10 MHz erreicht werden können. Ähnlich den Scheinwerfern kann ein zusätzlicher Reflektor 24 mit zugehöriger Empfängerelektronik 25 neben dem Scheinwerfer, ähnlich oder sogar gleich dem heutigen Nebelscheinwerfer, die Aufgabe des Empfängers erfüllen, ohne die Optik des Fahrzeugs zu beeinträchtigen.

Um die Photodiode 26 unterhalb der Sättigungsspannung zu halten, kann die Photodiode im Diodenbetrieb mit Vorspannung betrieben werden. Dabei wird eine Vorspannung an die Diode gelegt, um sie zu sperren (entgegengesetzte Polung zur Sättigungsspannung). Alternativ kann die Diode auch im Elementbetrieb ohne Vorspannung betrieben werden. Hier wirkt die Photodiode als Stromquelle. Die Photodiode wird dazu auf einem Null-Potential gehalten, während der Photostrom über einen Widerstand kompensiert wird.

Die Empfängerelektronik 25 kann zugleich eine Logikeinheit L bilden, die verschiedene Informationen ermittelt und auswertet. Einerseits kann die getaktete oder codierte Information des vorausfahrenden Fahrzeugs A zur Abstandsmessung eingesetzt werden. Da jedoch im Stadtverkehr bei geringeren Fahrtgeschwindigkeiten andere Abstände als z.B. bei Autobahnfahrten erforderlich sind, kann z.B. das vorausfahrende Fahrzeug A das Sendesignal mit seinen momentanen Geschwindigkeitsinformationen codieren. Das nachfolgende Fahrzeug B "liest" aus der empfangenen Information die Geschwindigkeit des vorausfahrenden Fahrzeuges ab und berechnet aus diesen Informationen seinen optimalen Abstand. Alternativ oder ergänzend kann ein konstantes Signal ausgesendet werden und das nachfolgende Fahrzeug B errechnet aus seiner eigenen Geschwindigkeit und der Stärke des empfangenen Signals den minimalen Abstand. Unabhängig davon kann natürlich in diesem System auch eine Information über einen Bremsvorgang bzw. über ein stehendes Fahrzeug vermittelt werden.

## Patentansprüche

1. Einrichtung zur Übertragung von Informationen von einem vorausfahrenden Fahrzeug (A) auf ein nachfolgendes Fahrzeug (B) mit
- einem Sender im vorausfahrenden Fahrzeug (A), der gepulste Lichtsignale (LS) vom menschlichen Auge nicht wahrnehmbar aussendet,
- einem Empfänger (23) im nachfolgenden Fahrzeug (B), der die vom Sender ausgesandten Lichtsignale empfängt und auswertet,
- mindestens einer Leuchtdiode (22) als Sender,
**dadurch gekennzeichnet, daß** die Leuchtdiode (22) die gepulsten Lichtsignale (LS) in einer vom menschlichen Auge nicht wahrnehmbaren Frequenz und im sichtbaren Wellenbereich sendet, die vom Empfänger (23) erkennbar sind, wobei das Lichtsignal (LS) in Abhängigkeit von der tatsächlichen Verzögerung oder Beschleunigung gebildet ist und eine Schalteinrichtung (13) die Stärke und/oder Frequenz des Senders (11) in Abhängigkeit von der Größe der Verzögerung oder Beschleunigung regelt.

2. Einricntung nach Anspruch 1, **dadurch gekennzeichnet, daß** der Empfänger (23) wenigstens eine Photodiode (26) in einem Reflektor (24) aufweist.

3. Einrichtung nach Anspruch 1, **dadurch gekennzeichnet, daß** das Signal zur Bildung des Lichtsignals (LS) von einem Beschleunigungssensor (16) ermittelt ist.

4. Einrichtung nach Anspruch 1, **dadurch gekennzeichnet, daß** sie als Zusatzeinrichtung vom Bordnetz (19) nur mit Strom versorgt ist und Signale zur Bildung des Lichtsignals (LS) in Abhängigkeit eines vorzugsweise in das Gehäuse der Zusatzeinrichtung integrierten, der Zusatzeinrichtung zugeordneten Beschleunigungssensors (16) ermittelt und mit der ebenfalls integrierten Schalteinrichtung (13) den Sender schaltet.

5. Einrichtung nach einem der vorhergehenden Ansprüche, **dadurch gekennzeichnet, daß** das Lichtsignal (LS) Informationen über die Bremstätigkeit und/oder Geschwindigkeits- und/oder Abstandsinformationen enthält, die von dem Empfänger (23) im nachfolgenden Fahrzeug (B) decodierbar sind.

## Claims

1. Device for transmitting information from a vehicle (A) travelling in front to a vehicle (B) travelling behind, having
• a transmitter in the vehicle (A) travelling in front which transmits pulsed light signals (LS) which are not perceptible to the human eye,
• a receiver (23) in the vehicle (B) travelling behind which receives and evaluates the light signals transmitted from the transmitter,
• at least one light emitting diode (22) as transmitter,
**characterised in that** the light emitting diode (22) transmits the pulsed light signals (LS) at a frequency, which is not perceptible to the human eye, and in the visible frequency range, which signals are detectable by the receiver (23), the light signal (LS) being formed dependent upon the actual deceleration or acceleration and a switch device (13) controlling the strength and/or frequency of the transmitter (11) dependent upon the magnitude of the deceleration or acceleration.

2. Device according to claim 1, **characterised in that** the receiver (23) has at least one photodiode (26) in a reflector (24).

3. Device according to claim 1, **characterised in that** the signal for forming the light signal (LS) is detected by an acceleration sensor (16).

4. Device according to claim 1, **characterised in that** it is provided only with current as supplementary device from the supply system (19) and detects signals for forming the light signal (LS) dependent upon an acceleration sensor (16), which is preferably integrated in the housing of the supplementary device and assigned to the supplementary device, and connects the transmitter to the likewise integrated switch device (13).

5. Device according to one of the preceding claims, **characterised in that** the light signal (LS) contains information about the braking activity and/or speed- and/or distance information which can be decoded by the receiver (23) in the vehicle (B) travelling behind.

## Revendications

1. Dispositif de transmission d'informations, d'un véhicule précédent (A) à un véhicule suivant (B) comportant
- un émetteur dans le véhicule précédent (A) qui émet des signaux lumineux pulsés (LS) non perceptibles par l'oeil humain,
- un récepteur (23) dans le véhicule suivant (B) qui reçoit et exploite les signaux lumineux émis par l'émetteur,
- au moins une diode luminescente (22) comme émetteur,
**caractérisé en ce que** la diode luminescente (22) émet les signaux lumineux pulsés (LS) dans une fréquence non perceptible par l'oeil humain et dans la gamme d'ondes visibles, qui sont reconnaissables par le récepteur (23), le signal lumineux (LS) étant formé en fonction du ralentissement effectif ou de l'accélération et un dispositif de commutation (13) régulant l'intensité et/ou la fréquence de l'émetteur (11) en fonction de la valeur du ralentissement ou de l'accélération.

2. Dispositif selon la revendication 1, **caractérisé en ce que** le récepteur (23) comporte au moins une photodiode (26) dans un réflecteur (24).

3. Dispositif selon la revendication 1, **caractérisé en ce que** le signal destiné à former le signal lumineux (LS) est déterminé par un capteur d'accélération (16).

4. Dispositif selon la revendication 1, **caractérisé en ce qu'**en tant que dispositif supplémentaire, il est alimenté uniquement en courant par le réseau de bord (19) et détermine des signaux pour former le signal lumineux (LS) en fonction d'un capteur d'accélération (16) intégré de préférence dans le boîtier du dispositif supplémentaire et associé au dispositif supplémentaire, et commande l'émetteur au moyen du dispositif de commutation (13) également intégré.

5. Dispositif selon l'une des revendications précédentes, **caractérisé en ce que** le signal lumineux (LS) contient des informations relatives à l'activité de freinage et/ou des informations de vitesse et/ou de distance qui peuvent être décodées par le récepteur (23) dans le véhicule suivant (B).
